# DEMANDE DE BREVET EUROPEEN

(11) **EP 1 235 151 A1**
(43) Date de publication de la demande: **28.08.2002**
(21) Numéro de dépôt: 02290249.8
(22) Date de dépôt: 04.02.2002
(51) Int. Cl.: G06F 9/46, H04L 12/24

(54) **Procédé de supervision et de controle d'un reseau de transport**

(30) Priorité: 22.02.2001 FR 0102390
(71) Demandeur: ALCATEL, 75008 Paris (FR)
(72) Inventeur: Toure, Famory, 91300 Massy (FR); Robinson, Julien, 75014 Paris (FR)
(74) Mandataire: Chaffraix, Sylvain

(57) **Abrégé**

L'invention concerne un procédé de supervision et de contrôle au moyen d'un client de supervision (3), d'un réseau de transport comportant au moins un serveur (2) de données basé sur un protocole de type SNMP. Selon l'invention, le client de supervision (3) est basé sur un protocole de type OPC et le procédé consiste à connecter ledit client de supervision (3) basé sur un protocole de type OPC, à au moins une passerelle (4) comportant des moyens pour assurer la liaison entre ledit serveur (2) basé sur un protocole de type SNMP et ledit client de supervision (3) basé sur un protocole de type OPC en utilisant une description des données dudit serveur à partir d'une base d'information de gestion.

## Description

L'invention concerne un procédé de supervision et de contrôle au moyen d'un dispositif client, d'un réseau de transport comportant au moins un serveur basé sur le protocole SNMP (Simple Network Management Protocol).

Le domaine de l'invention est celui de la supervision et du contrôle d'un réseau de transport, notamment d'un réseau de transport de télécommunications.

On a représenté figure la), un système de supervision d'un réseau de transport de télécommunications existant.

Un tel système comprend des équipements à superviser 1 reliés à un (ou plusieurs) serveur(s) 2 généralement selon un protocole de communication SNMP (acronyme anglais de *Simple Network Management Protocol).* Le serveur 2 peut lui-même recevoir les données d'un ou plusieurs équipements 1.

Certains équipements ne sont pas basés sur le protocole SNMP. Dans ce cas, lorsque l'équipement 1 dispose d'une puissance de calcul suffisante, un agent SNMP 10 permettant d'utiliser le protocole de communication SNMP entre l'équipement 1 et le serveur 2, est embarqué dans l'équipement 1 et le constructeur de cet équipement fournit une base d'information de gestion (en anglais, MIB acronyme de Management Information Base), permettant de connaître les ressources (ou données) accessibles sur l'équipement. Lorsque l'équipement à superviser 1 ne dispose pas d'une puissance de calcul suffisante pour embarquer un agent SNMP et est basé par exemple sur le protocole "Firewire" de la société Sony, protocole de type "Ethernet", l'agent SNMP 10 est déporté sur le serveur 2.

Le(s) serveur(s) 2 est(sont) relié(s) à un (ou plusieurs) dispositif(s) client(s) de supervision 3 qui permet (permettent) notamment d'enregistrer les données ou de les présenter généralement sous forme graphique à un opérateur chargé de la supervision et du contrôle.

On désignera dans la suite le dispositif client de supervision par client de supervision.

Un logiciel de contrôle et de supervision est installé sur le client de supervision 3 et le serveur 2 incluant l'agent SNMP lorsque celui-ci est déporté sur le serveur 2. Le protocole de communication entre le serveur 2 et le client de supervision 3 est alors spécifique du logiciel installé.

Parmi ces logiciels, on peut citer le système "HP Open View" de la société Hewlett Packard qui est complexe et ne concerne que la supervision de réseau, ou encore le logiciel "Visio" de la société Microsoft, outil de conception facile à utiliser qui permet de représenter visuellement les liens entre les différents équipements d'un réseau mais n'assure pas les fonctions de contrôle du réseau telles que la présentation des alarmes concernant le réseau supervisé ou celle des historiques des données supervisées.

On peut également citer les passerelles conformes à la norme CORBA de communication entre applications (CORBA est l'acronyme anglais de *Common Object Request Broker Architecture*) : elles facilitent l'accès au protocole SNMP, mais ne permettent pas d'assurer la supervision d'un réseau.

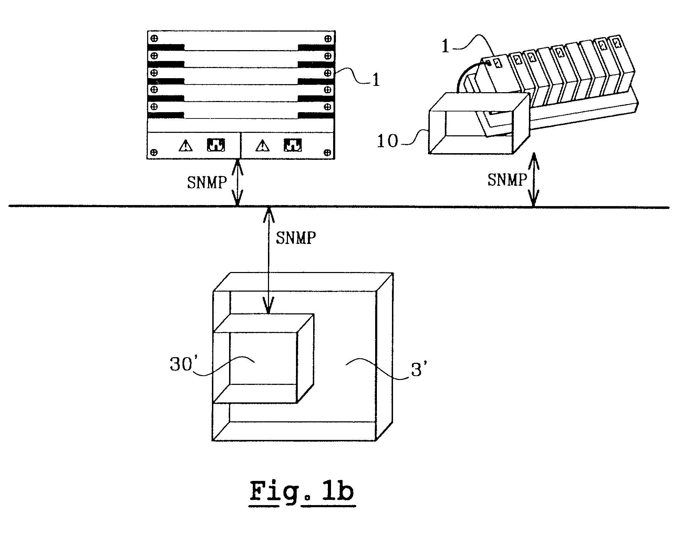

Un autre système de supervision est représenté figure 1b). Il comporte un client de supervision et de contrôle 3' directement relié aux équipements à superviser 1 et sur lequel est installé un logiciel de supervision et de contrôle développé par programmation à partir de composants existants.

Un tel programme peut être développé en utilisant un composant 30' "ActiveX" pour accéder par le langage de programmation "Visual Basic" à un équipement basé sur le protocole SNMP : ce composant "ActiveX" permet d'encapsuler l'interface de programmation d'application (en anglais API acronyme de Application Programming Interface) du protocole SNMP ce qui facilite ainsi le développement. Bien que la tâche du programmeur soit ainsi facilitée, il doit cependant effectuer un développement pour visualiser, animer et contrôler le réseau à superviser.

Animer le réseau consiste à présenter en temps réel ou sous forme d'historiques, les données à la disposition du superviseur ou à modifier ces données.

Il existe par ailleurs, dans un domaine autre que celui de la supervision d'un réseau de transport, des outils de supervision d'usines ou de processus automatisés, basés sur la norme OPC acronyme anglais de *Object linking and embedding for Process Control,* norme de communication entre applications utilisée sur le système Windows de la société Microsoft.

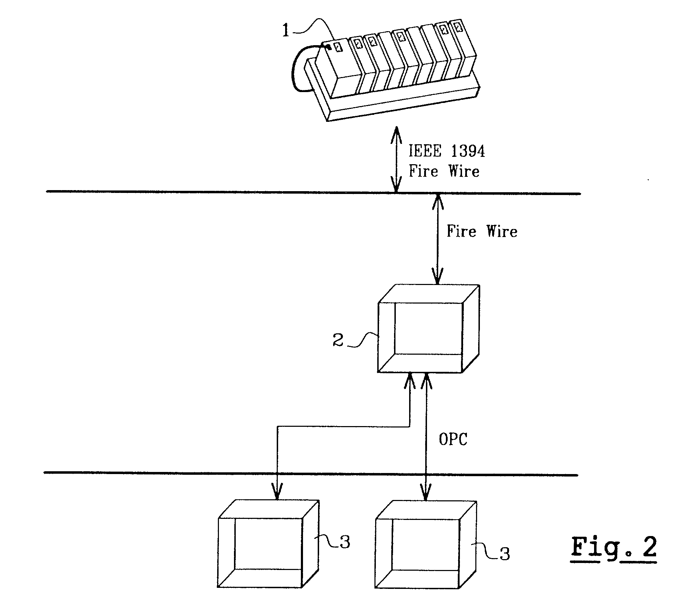

Un de ces outils est représenté figure 2.

L'équipement à superviser 1 regroupant par exemple des capteurs, envoie ses données à un serveur 2 selon un protocole de communication de type "Firewire". Le serveur 2 est lui-même éventuellement relié à un client de supervision3 selon un protocole de communication OPC permettant de présenter les données généralement sous forme graphique.

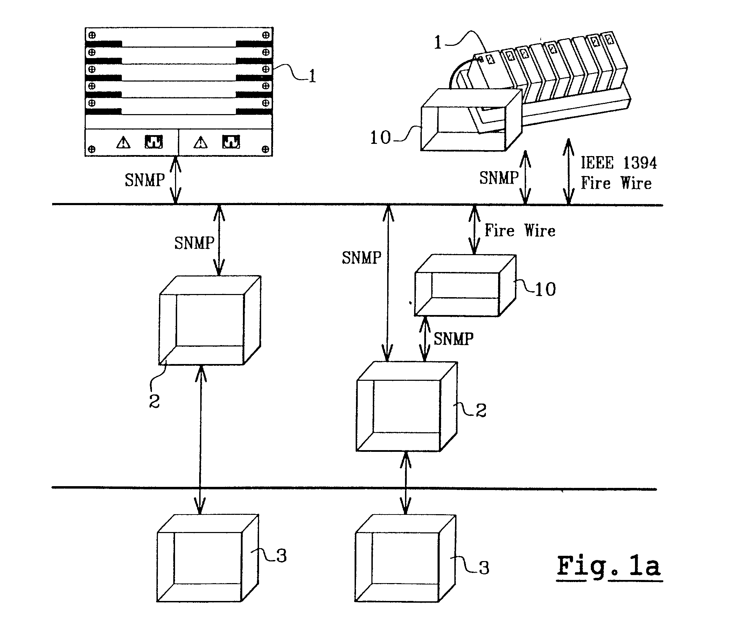

Ces outils "sur étagère" ou ayant nécessité un peu de développement, sont généralement dotés de multiples fonctions d'animation des données (zoom, panoramique, présentation du réseau en plusieurs couches, ...) ; ils présentent une bonne ergonomie mais ne sont pas adaptés à la supervision d'un réseau de transport tel que décrit figure 1, comportant notamment des équipements utilisant la norme SNMP.

Le logiciel "Graph WorX32" d'Iconics, de type OPC permet par exemple de surveiller des capteurs de température, d'entrée-sortie, des potentiomètres, des indicateurs de tension, etc.

Le but de la présente invention est donc de pouvoir utiliser de tels outils de supervision basés sur la norme OPC pour la supervision d'un réseau de transport comportant notamment un grand nombre d'équipements utilisant la norme SNMP.

L'invention a pour objet un procédé de supervision et de contrôle au moyen d'un client de supervision, d'un réseau de transport comportant au moins un serveur de données basé sur un protocole de type SNMP, principalement caractérisé en ce que le client de supervision est basé sur un protocole de type OPC et en ce qu'il consiste à connecter ledit client de supervision basé sur un protocole de type OPC, à au moins une passerelle comportant des moyens pour assurer la liaison entre ledit serveur basé sur un protocole de type SNMP et ledit client de supervision basé sur un protocole de type OPC en utilisant une description des données dudit serveur à partir d'une base d'information de gestion.

Selon une caractéristique de l'invention, la description à partir d'une base d'information de gestion est développée avec un langage orienté objet basé sur le langage XML.

Selon une autre caractéristique de l'invention, le serveur basé sur un protocole de type SNMP est un serveur d'un réseau de transport de télécommunications et/ou informatique.

L'invention concerne également un serveur de données basé sur un protocole de type SNMP, caractérisé en ce qu'il comporte au moins une passerelle apte à assurer une liaison avec un client de supervision basé sur un protocole de type OPC, en utilisant une description des données dudit serveur à partir d'une base d'information de gestion.

D'autres particularités et avantages de l'invention apparaîtront clairement à la lecture de la description faite à titre d'exemple non limitatif et en regard des dessins annexés sur lesquels :
- les figures 1a) et 1b) déjà décrites représentent schématiquement un système de supervision d'un réseau de transport existant,
- la figure 2 déjà décrite représente schématiquement un système de supervision d'un processus industriel existant,
- la figure 3 représente schématiquement un système de supervision d'un réseau de transport selon l'invention.

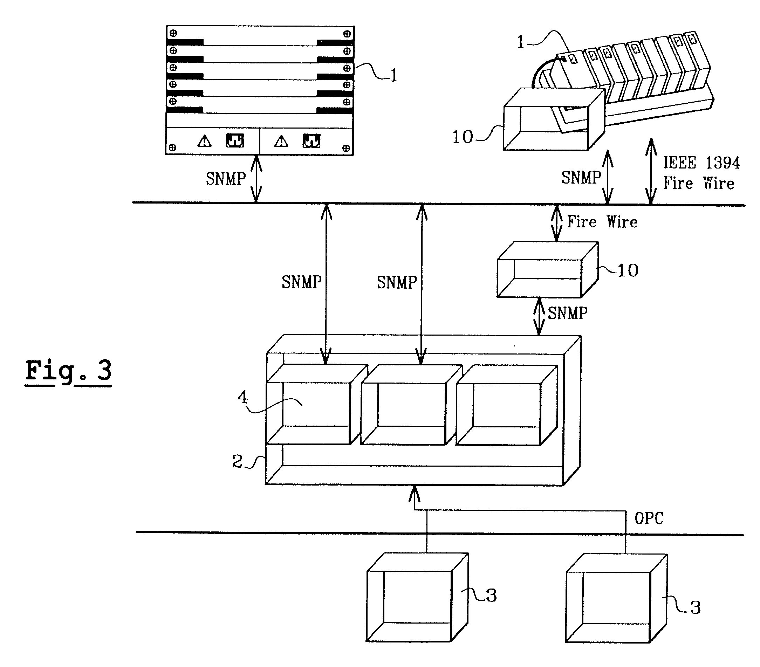

Un système de supervision selon l'invention est représenté figure 3. On considérera plus particulièrement l'application à un réseau de télécommunications.

L'équipement à superviser 1 tel qu'un routeur, un commutateur, etc, envoie ses données à un serveur 2 ; le serveur 2 peut recevoir les données d'un ou plusieurs équipements 1. Comme déjà décrit en relation avec la figure la), lorsque l'équipement à superviser 1 ne comporte pas d'agent SNMP, mais communique selon un protocole de type "Firewire", alors un agent SNMP 10 est déporté vers le serveur 2.

Selon l'invention, la liaison entre le serveur 2 et le client de supervision 3 de type OPC est assurée par une (ou plusieurs) passerelle(s) intégrée(s) au serveur 2 et notamment une passerelle 4 ; le serveur 2 peut aussi être relié à plusieurs clients de supervision 3.

La passerelle 4 est un programme définissant un protocole de communication entre un serveur SNMP et un client OPC, permettant de visualiser les données à superviser de préférence sous forme arborescente, et de les animer. Les données fournies par le serveur 2 sont les objets à superviser et leurs propriétés. On entend par objet, les équipements 1 du réseau de transport considéré.

Le programme constitué d'une suite d'instructions comporte une première étape de description des données. Cette description est réalisée en parcourant et en choisissant les données à superviser parmi les données d'une base d'information de gestion (MIB) et en utilisant pour les définir, la syntaxe d'un langage orienté objet tel que le langage XML (acronyme de eXtended Markup Language).

La description d'un élément (ou classe) de la base d'information de gestion en XML est de la forme :
<class name="Routeur" isa="SNMPObject">
   <Attributes>
<OID Name="sysDsecr" type="string" id="system.sysDescr.0" />
<OID Name="sysName" type="string" id="system.sysName.0" />
<OID Name="sysUpTime" type="r8" id="system.sysUpTime.0" />
   </Attributes>
</class Routeur>

La description d'une instance de cette classe, en l'occurrence d'un équipement à superviser est alors par exemple :
<Routeur name="SOCIETE_ROUTEUR1" IPAddress="195.9.12.245" />

Il est possible de décrire le réseau sous forme hiérarchique selon par exemple les instructions suivantes :
<Routeur name="SOCIETE_ROUTEUR1" IPAddress="195.9.12.245" />
   <Children>
   <Compaq name="NT_Machine1" IPAddress="195.9.12.205">
   <Compaq name="NT_Machine2" IPAddress="195.9.12.206">
   </Children>
</Routeur>

Conformément à un protocole de communication entre applications du type COM/DCOM (acronyme anglais de Component Object Model/ Distributed Component Object Model) qui permet notamment de définir des composants qui peuvent être réintégrés dans d'autres applications, les objets à superviser, une fois décrits en utilisant un schéma de type XML, sont dynamiquement créés.

On pourra par exemple utiliser une interface d'invocation dynamique telle que celle qui existe notamment en Java, Corba, Visual Basic : en effet, ces interfaces permettent en cours d'exécution du programme, à une instance d'une classe de récupérer les attributs d'une classe soeur ou d'appeler une méthode d'une classe soeur.

Dans la réalisation pratique qui a été mise en oeuvre, on a créé un Objet Générique qui permet de décrire aussi bien des classes que les instances de ces classes et qui redéfinit les interfaces d'invocation dynamique.

Cet Objet Générique présente l'avantage de permettre de n'utiliser qu'un seul objet pour décrire les objets supervisés. Cela permet aussi d'accéder aux objets sous une application bureautique telle que par exemple Excel, Word, Access ou Visual Basic en utilisant la syntaxe suivante :
SociétéRouteur1.sysDescr = "Ceci est le premier routeur de la Société".

Le procédé proposé permet de superviser et de contrôler aussi bien des équipements SNMP que des équipements non SNMP. Il permet aussi d'utiliser un grand nombre de systèmes de supervision OPC existants, ainsi qu'une application bureautique (Excel, Word, Access, Visual Basic).

Le réseau de transport concerné par ce procédé peut être celui d'un réseau de télécommunications ou d'un réseau informatique.

## Revendications

1. Procédé de supervision et de contrôle au moyen d'un client de supervision, d'un réseau de transport comportant au moins un serveur de données basé sur un protocole de type SNMP, **caractérisé en ce que** le client de supervision est basé sur un protocole de type OPC et **en ce qu'**il consiste à connecter ledit client de supervision basé sur un protocole de type OPC, à au moins une passerelle comportant des moyens pour assurer la liaison entre ledit serveur basé sur un protocole de type SNMP et ledit client de supervision basé sur un protocole de type OPC en utilisant une description des données dudit serveur à partir d'une base d'information de gestion.

2. Procédé selon la revendication précédente, **caractérisé en ce que** la description à partir d'une base d'information de gestion est développée avec un langage orienté objet basé sur le langage XML.

3. Procédé selon l'une des revendications précédentes, **caractérisé en ce que** le serveur basé sur un protocole de type SNMP est un serveur d'un réseau de transport de télécommunications.

4. Procédé selon l'une des revendications précédentes, **caractérisé en ce que** le serveur basé sur un protocole de type SNMP est un serveur d'un réseau de transport informatique.

5. Serveur de données (2) basé sur un protocole de type SNMP, **caractérisé en ce qu'**il comporte au moins une passerelle (4) apte à assurer une liaison avec un client de supervision (3) basé sur un protocole de type OPC, en utilisant une description des données dudit serveur (2) à partir d'une base d'information de gestion.
